Europäisches Patentamt

European Patent Office

Office européen des brevets

(11) Veröffentlichungsnummer: **0 071 104**

**A1**

(12) # EUROPÄISCHE PATENTANMELDUNG

(21) Anmeldenummer: 82106357.5

(22) Anmeldetag: 15.07.82

(51) Int. Cl.³: **H 02 B 1/10**
**H 02 G 3/12**

(30) Priorität: 31.07.81 DE 3130316

(43) Veröffentlichungstag der Anmeldung:
09.02.83 Patentblatt 83/6

(84) Benannte Vertragsstaaten:
AT BE CH DE FR GB IT LI LU NL SE

(71) Anmelder: INSTA ELEKTRO GmbH & Co. KG
Wefelshohler Str. 35 Postfach 1830
D-5880 Lüdenscheid(DE)

(72) Erfinder: Zabel, Helmut
Obergockelshohl 12
D-5990 Altena(DE)

(54) Spreizbefestigung für elektrische Installationsgeräte in Unterputzdosen.

(57) Die Erfindung betrifft eine neuartige Spreizbefestigung für elektrische Installationsgeräte zum Einbau in handelsübliche Unterputzdosen. Dabei werden am Tragrahmen einander gegenüberliegende und beweglich eingehängte Spreizkrallen mit Hilfe einer einzigen Spannschraube zur Spreizung gebracht. Durch den Einsatz besonders geformter und gelagerter Spreizkrallen können diese gleichmäßig gespannt und in Unterputzeinbaudosen von 55 mm und 70 mm Durchmesser befestigt werden.

EP 0 071 104 A1

Croydon Printing Company Ltd.

Anm.: Fa. INSTA ELEKTRO GMBH & CO KG       5880 Lüdenscheid

## Spreizbefestigung für elektrische Installationsgeräte in Unterputzdosen

Die Erfindung betrifft eine Spreizbefestigung für elektrische Installationsgeräte gemäß dem Oberbegriff des Anspruches 1.

Bei einem bekannten Installationsgerät (DE-OS 15 90 172) erfolgt die Befestigung in Unterputzeinbaudosen mittels am Tragrahmen beweglich eingehängter Spreizkrallen, wobei jede Spreizkralle durch eine Schraube im Geräteeinsatz gehalten und gespannt wird.

Aufgabe der Erfindung ist es, den Konstruktionsaufwand bei einer solchen Befestigungsart zu verringern und eine verbesserte Spreizbefestigung zu schaffen, die eine kürzere Montagezeit des Gerätes in eine Unterputzeinbaudose ermöglicht.

Diese Aufgabe wird durch die im kennzeichnenden Teil des Anspruches 1 angegebenen Merkmale gelöst.

Ein Ausführungsbeispiel der Spreizbefestigung nach der Erfindung gibt die Zeichnung in drei Figuren wieder. Es zeigt:

Figur 1 eine Darstellung zur Veranschaulichung der Spreizbefestigung im Bild links mit gespannter Spreizkralle in eine Unterputzeinbaudose von 70 mm Durchmesser, im Bild rechts mit ungespannter Spreizkralle in eine Unterputzeinbaudose von 55 mm Durchmesser,

Figur 2 eine Draufsicht auf die Figur 1,

Figur 3 eine Einzelheit X aus Figur 2, bei der speziell der Spannschraubenbereich an den Spreizkrallen gezeigt ist, jedoch ohne Spannschraube.

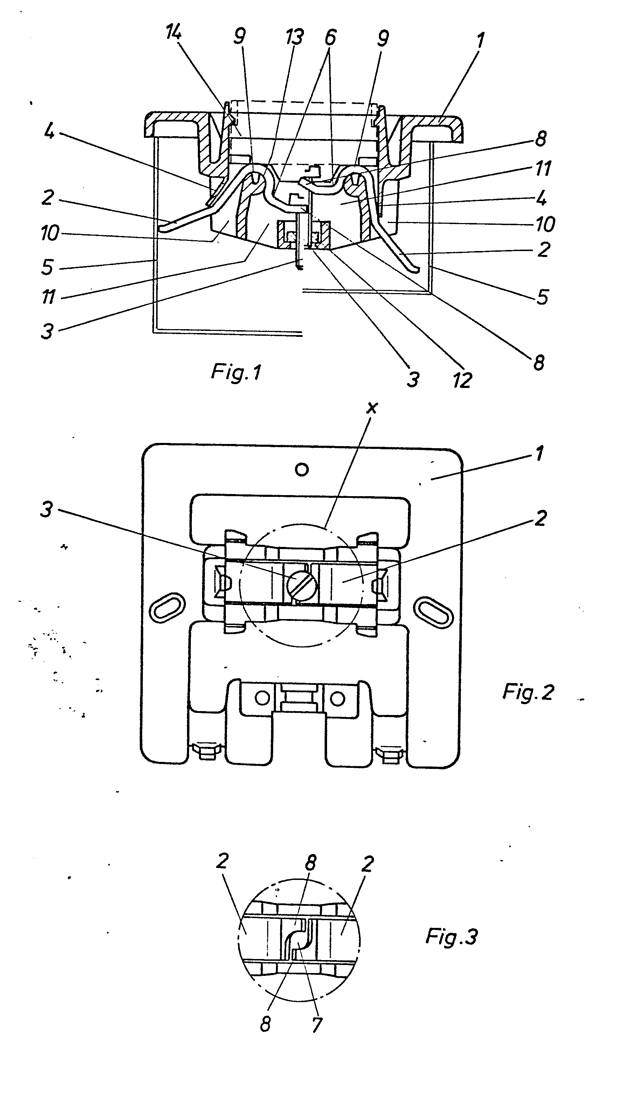

Die in den Figuren 1 bis 3 dargestellte Spreizbefestigung für ein elektrisches Installationsgerät in eine Unterputzeinbaudose 5,5' besteht im wesentlichen aus einem Tragrahmen 1, zwischen dessen gegenüberliegenden Schenkeln 10 mit den beweglich eingehängten Spreizkrallen 2 ein Verbindungsstück 11 mit einer Gewindeaufnahme 12 angeordnet ist. Auf diesem Verbindungsstück sind die Spreizkrallen 2 mit nach innen gerichteten Verlängerungen 6, quasi gegeneinander anliegend und der Geräteeinsatz 14 placiert. Zur Bildung einer Durchführungsöffnung 7 für eine die Spreizung bewirkende Spannschraube 3 sind die Verlängerungen 6 an den sich gegenüberliegenden Enden mit als Formteile ausgebildete Stege 8 versehen. Zur Fixierung der Spreizkrallen 2 in der Ruhestellung sind am Tragrahmen 1 zu beiden Seiten der Schenkel 10 abwärts gerichtete Federzungen 4 angeformt.

Soll der Tragrahmen 1 in eine der Unterputzeinbaudosen 5,5' durch Spreizung der Spreizkrallen befestigt werden, so geschieht dies erfindungsgemäß mittels einer einzigen Spannschraube 3. Wie aus den Zeichnungsfiguren ersichtlich, ist die Spannschraube 3 dabei mit ihrem Schaft in der Durchführungsöffnung 7 geführt, die mit der Gewindeaufnahme 12 in dem Verbindungsstück 11 fluchtet. Zu beiden Seiten der mittig im Verbindungsstück 11 angeordneten Gewindeaufnahme 12 sind gewölbte Ansätze 13 placiert, auf welche die Verlängerungen 6 der Spreizkrallen 2 mit entsprechend geformten Wölbungen 9 gelagert sind. Beim Anziehen drückt der Kopf der Spannschraube auf die als Formteile ausgebildeten Stege 8 und bewirkt über die als Lagerstellen ausgebildeten Ansätze 13 eine gleichmäßige Spreizung der Spreizkrallen. Die Erfin-

- 3 -

dung ermöglicht durch die Befestigungsart mit nur einer
Spannschraube und mit bewährter Spreizkrallenbefestigung
eine Schnellmontage eines elektrischen Unterputzgerätes
sowohl in eine Unterputzeinbaudose von 55 m/m Durchmesser
als auch in eine solche von 70 m/m Durchmesser.

Patentansprüche

1. Spreizbefestigung für ein elektrisches Installationsgerät in eine Unterputzeinbaudose, bestehend aus einem Tragrahmen mit daran an sich gegenüberliegenden Seiten angeformten Schenkeln, in die jeweils eine Spreizkralle beweglich eingehängt ist, dadurch gekennzeichnet, daß zwischen den Schenkeln (10) am Tragrahmen (1) ein Verbindungsstück (11) mit einer Gewindeaufnahme (12) angeordnet ist, auf dem die Spreizkrallen (2) mit nach innen gerichteten Verlängerungen (6) gegeneinander anliegend und der Geräteeinsatz (14) placiert sind, wobei zur Bildung einer Durchführungsöffnung (7) für eine die Spreizung bewirkende Spannschraube (3) an den Enden der Verlängerungen (6) als Formteile ausgebildete Stege (8) angeformt sind.

2. Spreizbefestigung nach Anspruch 1, dadurch gekennzeichnet, daß die Gewindeaufnahme (12) für die Spannschraube (3) in der Mitte des Verbindungsstückes (11) angeordnet ist.

3. Spreizbefestigung nach Anspruch 1 und 2, dadurch gekennzeichnet, daß die Durchführungsöffnung (7) und die Gewindeaufnahme (12) zur Aufnahme des Schaftes der Spannschraube (3) miteinander fluchten.

4. Spreizbefestigung nach den Ansprüchen 1 bis 3, dadurch gekennzeichnet, daß am Tragrahmen (1) zu beiden Seiten der Schenkel (10) abwärts gerichtete Federzungen (4) angeformt sind, die die Spreizkrallen (2) so umgeben, daß diese dadurch in der Ruhelage fixiert sind.

- 2 -

- 2 -

5. Spreizbefestigung nach den Ansprüchen 1 bis 4, dadurch gekennzeichnet, daß zu beiden Seiten der Gewindeaufnahme (12) auf dem Verbindungsstück (11) gewölbte Ansätze (13) angeordnet sind, und daß die Verlängerungen (6) der Spreizkrallen (2) Wölbungen (9) aufweisen, die die Ansätze (13) umfassen, damit beim Anziehen der Spannschraube (3) eine gleichmäßige Bewegung auf die Spreizkrallen ausübbar ist.

0071104

Fig.1

Fig.2

Fig.3

0071104
Nummer der Anmeldung

# EUROPÄISCHER RECHERCHENBERICHT

Europäisches
Patentamt

EP 82 10 6357

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | DE-A-2 757 267 (MERTEN)<br>* Seite 9, Zeile 13 - Seite 11, Zeile 8; Figuren 1,4,6 *<br>--- | 1-5 | H 02 B 1/10<br>H 02 G 3/12 |
| Y | FR-A-2 007 269 (STOTZ-KONTAKT)<br>* Seite 2, Zeilen 19-37; Figur 2 *<br>--- | 4 | |
| A | US-A-3 283 937 (THEODORIDES)<br>* Spalte 1, Zeile 57 - Spalte 2, Zeile 44 *<br>--- | 1 | |
| A | DE-C- 475 892 (VEDDER)<br>* Seite 2, Zeilen 57-70; Figuren 1,2 *<br>--- | 1 | |
| A | US-A-4 000 874 (FINLEY)<br>* Spalte 4, Zeilen 7-40; Figuren 1-5 *<br>----- | 1 | RECHERCHIERTE SACHGEBIETE (Int. Cl. 3)<br><br>H 02 B 1/00<br>H 02 G 3/00 |

Der vorliegende Recherchenbericht wurde für alle Patentansprüche erstellt.

| Recherchenort | Abschlußdatum der Recherche | Prüfer |
|---|---|---|
| DEN HAAG | 16-11-1982 | TIELEMANS H.L.A. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

                                                     
& : Mitglied der gleichen Patentfamilie, übereinstimmendes Dokument

EPA Form 1503 03.82